# EUROPEAN PATENT APPLICATION

(11) **EP 4 749 881 A1**
(43) Date of publication of application: **27.05.2026**
(21) Application number: 25208488.4
(22) Date of filing: 14.10.2025
(51) Int. Cl.: H02J 7/40, H02J 7/47, H02J 7/50

(54) **ENERGY STORAGE SYSTEM AND ID ASSIGNMENT METHOD OF ENERGY STORAGE SYSTEM**

(30) Priority: 26.11.2024 KR 20240171391
(71) Applicant: SAMSUNG SDI CO., LTD., Yongin-si, Gyeonggi-do 17084 (KR)
(72) Inventor: KWON, Kihyun, 17084 Yongin-Si (KR)
(74) Representative: Marks & Clerk LLP

(57) **Abstract**

The present disclosure provides an energy storage system and an ID assignment method of the energy storage system. There is provided an energy storage system including: a first energy storage device that includes a first battery rack and a first battery control device connected to the first battery rack; a second energy storage device that includes a second battery rack and a second battery control device connected to the second battery rack; and a system BMS that is electrically connected to the first energy storage device and the second energy storage device, in which the first battery control device includes a first rack BMS that acquires and stores a first ID, and a first sensor unit that transmits the stored first ID to the second battery control device, and the second battery control device includes a second sensor unit that receives the first ID from the first sensor unit, and a second rack BMS that based on the received first ID generates a second ID and stores the generated second ID.

## Description

### FIELD

The present disclosure relates to an energy storage system and an (identification) ID assignment method of the energy storage system.

### BACKGROUND

An energy storage system (ESS) refers to a device that improves power usage efficiency by storing surplus electricity or energy produced through renewable energy in a storage device (for example, a battery) and supplying electricity as needed. The energy storage system includes a battery, a battery management system (BMS) for monitoring a status of the battery and for controlling and operating the battery, a power conversion system (PCS) for charging and discharging the battery, and a battery control unit (BCU) for diagnosing an energy storage device via communication with the BMS and the PCS and controlling charging and discharging of the battery.

Typically, the energy storage devices are used in a state where a plurality of battery modules are arranged in a longitudinal direction as a vertical direction and are connected to each other in a battery rack and a plurality of battery racks are arranged and connected in a horizontal direction, the battery module being a collection of a plurality of battery cells. In a circumstance of installing such an energy storage device, it is necessary to assign an individual ID to each battery rack to identify and control each battery rack. However, as a size of the energy storage system increases, the number of battery racks also increases. As a result, it takes a considerable amount of time to assign an individual ID to each battery rack. Further, there is a risk that IDs may be incorrectly assigned due to an error of an administrator or the like.

The herein information disclosed in this Background section is for enhancement of understanding of the background of the present disclosure, and therefore, it may contain information that does not constitute related (or prior) art.

### SUMMARY

The present disclosure provides an energy storage system and an ID assignment method of the energy storage system to solve the herein problems.

However, the technical problem to be solved by the present disclosure is not limited to the herein problem, and other problems not mentioned herein, and aspects and features of the present disclosure that would address such problems, will be clearly understood by those skilled in the art from the description of the present disclosure herein.

There is provided an energy storage system including: a first energy storage device that includes a first battery rack and a first battery control device connected to the first battery rack; a second energy storage device that includes a second battery rack and a second battery control device connected to the second battery rack; and a system BMS that is electrically connected to the first energy storage device and the second energy storage device, in which the first battery control device includes a first rack BMS that acquires and stores a first ID, and a first sensor unit that transmits the stored first ID to the second battery control device, and the second battery control device includes a second sensor unit that receives the first ID from the first sensor unit, and a second rack BMS that based on the received first ID generates a second ID and stores the generated second ID.

According to some embodiments of the present disclosure, the first energy storage device and the second energy storage device may be adjacent to one another.

According to some embodiments of the present disclosure, a number given for the second ID may be larger than a number given for the first ID.

According to some embodiments of the present disclosure, the first sensor unit and the second sensor unit may include parallel input/output (PIO) sensors.

According to some embodiments of the present disclosure, the first sensor unit may include a first output sensor that is disposed on a side of a case of the first battery control device, and the second sensor unit may include a second input sensor that is disposed on a side of a case of the second battery control device and is adjacent to the first output sensor, and a second output sensor that is disposed on the other side of the case of the second battery control device.

According to some embodiments of the present disclosure, the energy storage system may further include a third energy storage device that is adjacent to the second energy storage device and includes a third battery rack and a third battery control device connected to the third battery rack. The second sensor unit may transmit the generated second ID to the third battery control device of the third energy storage device. The third battery control device may include a third sensor unit that receives the second ID from the second sensor unit, and a third rack BMS that generates based on the received second ID a third ID and stores the generated third ID.

According to some embodiments of the present disclosure, a number given for the third ID may be larger than a number given for the second ID.

According to some embodiments of the present disclosure, the third sensor unit may include a third input sensor that is disposed on a side of a case of the third battery control device and is adjacent to the second output sensor.

According to some embodiments of the present disclosure, the first energy storage device may be disposed at an end of the energy storage system.

According to some embodiments of the present disclosure, the first battery control device and the second battery control device may use CAN communication for communication between the first rack BMS and the second rack BMS.

There is also provided an ID assignment method of an energy storage system, the method including: acquiring a first ID; storing, by a first energy storage device, the first ID; transmitting, by the first sensor unit of the first energy storage device, the first ID to the second energy storage device adjacent to the first energy storage device; receiving, by the second sensor unit of the second energy storage device, the first ID; and generating, by the second energy storage device, based on the received first ID, a second ID and storing the generated second ID.

According to some embodiments of the present disclosure, a number given for the second ID may be larger than a number given for the first ID.

According to some embodiments of the present disclosure, the first sensor unit and the second sensor unit may include parallel input/output (PIO) sensor.

According to some embodiments of the present disclosure, the first energy storage device may include a first battery control device, the second energy storage device may include a second battery control device, the first battery control device may store the first ID, and the second battery control device may generate the second ID and stores the generated second ID.

According to some embodiments of the present disclosure, the first sensor unit may include a first output sensor that is disposed on aside of a case of the first battery control device, the second sensor unit may include a second input sensor that is disposed on a side of a case of the second battery control device and is adjacent to the first output sensor, and a second output sensor that is disposed on another side of the case of the second battery control device, and the second input sensor may receive the first ID transmitted from the first output sensor.

According to some embodiments of the present disclosure, the ID assignment method of an energy storage system may further include: transmitting, by the second sensor unit, the second ID to a third energy storage device adjacent to the second energy storage device; receiving, by a third sensor unit of the third energy storage device, the second ID; generating, based on the received second ID, by the third energy storage device, a third ID and storing the generated third ID.

According to some embodiments of the present disclosure, a number given for the third ID may be larger than a number given for the second ID.

According to some embodiments of the present disclosure, the third energy storage device may include a third battery control device, and the third sensor unit may include a third input sensor that is disposed on a side of a case of the third battery control device and is adjacent to the second output sensor.

According to some embodiments of the present disclosure, the ID assignment method of an energy storage system may further include checking, by a system BMS, whether the first ID is stored in the first energy storage device and whether the second ID is stored in the second energy storage device.

According to some embodiments of the present disclosure, the first energy storage device and the second energy storage device may use controller area network (CAN) communication to transmit and receive the first ID.

According to some embodiments of the present disclosure, the initial ID may be assigned to the first battery rack, and sequential IDs may be automatically assigned to the remaining battery racks. Therefore, it is possible to save a time required for ID assignment, and thus, it is possible to efficiently manage the battery storage system.

However, aspects and features of the present disclosure are not limited to those described herein, and other aspects and features not mentioned will be clearly understood by a person skilled in the art from the detailed description, described herein.

At least some of the above and other features of the invention are set out in the claims.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 is a diagram schematically illustrating a structure of an energy storage system according to some embodiments of the present disclosure.
FIG. 2 is a perspective view of a battery rack of the energy storage system according to some embodiments of the present disclosure.
FIG. 3 is a perspective view of a battery module of the energy storage system according to some embodiments of the present disclosure.
FIG. 4 is a perspective view schematically illustrating a battery cell of the energy storage system according to some embodiments of the present disclosure.
FIG. 5 is a block diagram illustrating a functional configuration of a system BMS according to some embodiments of the present disclosure.
FIG. 6 is a diagram illustrating a hardware configuration of the system BMS according to some embodiments of the present disclosure.
FIG. 7 is a perspective view illustrating a battery control device according to some embodiments of the present disclosure.
FIG. 8 is a diagram illustrating an arrangement relationship between the battery control devices according to some embodiments of the present disclosure.
FIG. 9 is a flowchart illustrating an ID assignment method of an energy storage system according to some embodiments of the present disclosure.
FIG. 10 is a flowchart illustrating an ID assignment method of an energy storage system according to some embodiments of the present disclosure.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her disclosure in the best way.

The embodiments described in this specification and the configurations shown in the drawings are only some of the embodiments of the present disclosure and do not represent all of the technical aspects, and features of the present disclosure. Accordingly, it should be understood that there may be various equivalents and modifications that can replace or modify the embodiments described herein at the time of filing this application.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed herein could be termed a second element, component, region, layer, or section without departing from the teachings of example embodiments.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements. In addition, it will be understood that when a component is referred to as being "linked," "coupled," or "connected" to another component, the elements may be directly "coupled," "linked" or "connected" to each other, or another component may be "interposed" between the components".

Also, any numerical range disclosed and/or recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

Further, a BMS and/or other related devices or components according to the present disclosure may be implemented by using any suitable hardware, firmware (for example, application-specific integrated circuits), software, or a suitable combination of software, firmware, and hardware. For example, various components of the BMS and/or other related devices or components according to the present disclosure may be formed on a single integrated circuit chip, or on separate integrated circuit chips. Further, various components of the BMS may be implemented on a flexible printed circuit film, and may be formed on a tape carrier package, a printed circuit board, or a substrate same as the BMS. Further, various components of the BMS may be processes or threads to be executed by one or more processors in one or more computing devices, and may execute computer program instructions and interact with other components to perform various functions to be described herein. The computer program instructions may be stored, for example, in a memory that operates on a computing device using a standard memory device such as a random access memory. The computer program instructions may also be stored, for example, in other non-transitory computer readable media such as a CD-ROM, a flash drive, and the like. Further, those skilled in the art should recognize that functions of various computing devices may be combined with each other or may be integrated into a single computing device, or that functions of a specific computing device may be distributed to one or more other computing devices without departing from the embodiments of the present disclosure.

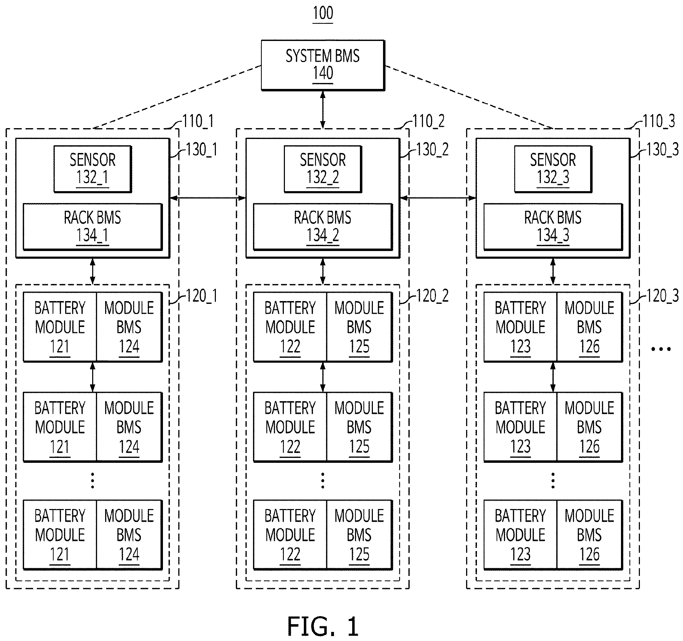

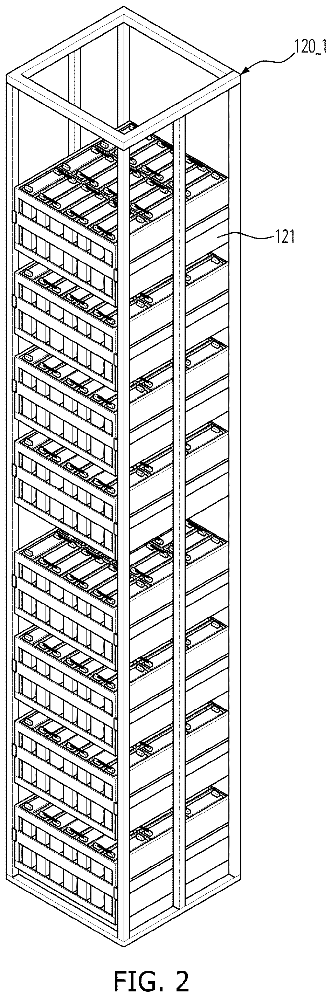

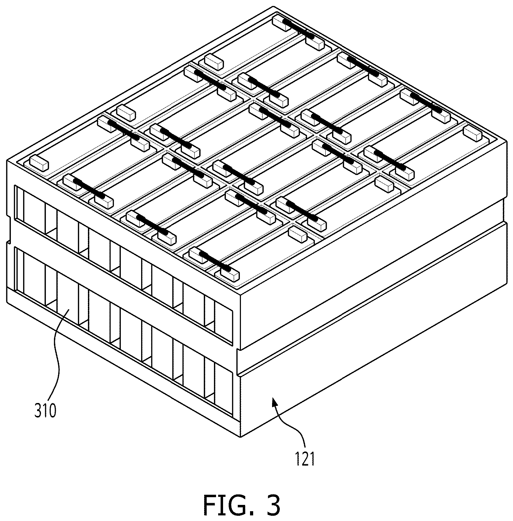

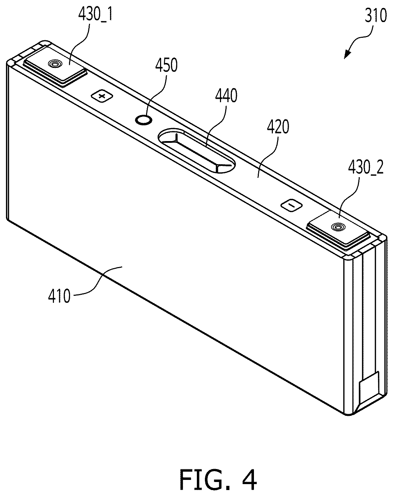

FIG. 1 is a diagram schematically illustrating a structure of an energy storage system 100 according to some embodiments of the present disclosure. FIG. 2 is a perspective view of a battery rack 120_1 of the energy storage system 100 according to some embodiments of the present disclosure. FIG. 3 is a perspective view of a battery module 121 of the energy storage system 100 according to some embodiments of the present disclosure. FIG. 4 is a perspective view schematically illustrating a battery cell 400 of the energy storage system 100 according to some embodiments of the present disclosure.

Referring to FIG. 1, the energy storage system 100 may include, energy storage devices 110_1, 110_2, 110_3, and ··· having an accommodation space therein, battery racks 120_1, 120_2, 120_3, and ···, which are respectively arranged in the internal accommodation spaces of the energy storage devices 110_1, 110_2, 110_3, and ··· and in which a plurality of battery modules 121, 122, 123, and ··· are stacked, and battery control devices 130_1, 130_2, 130_3, and ··· which are respectively connected to the battery racks 120_1, 120_2, 120_3, and ···. In some embodiments, the energy storage system 100 may be configured in a form in which a plurality of energy storage devices 110_1, 110_2, 110_3, and ··· including battery racks 120_1, 120_2, 120_3, and ··· and battery control devices 130_1, 130_2, 130_3, and ··· are arranged. Hereinafter, the energy storage devices 110_1, 110_2, and 110_3 illustrated in FIG. 1 are respectively defined as a first energy storage device 110_1, a second energy storage device 110_2, and a third energy storage device 110_3. Further, the battery racks 120_1, 120_2, and 120_3 illustrated in FIG. 1 are respectively defined as a first battery rack 120_1, a second battery rack 120_2, and a third battery rack 120_3. Further, the battery modules 121, 122, and 123·illustrated in FIG. 1 are respectively defined as a first battery module 121, a second battery module 122, and a third battery module 123. Further, module BMSs 124, 125, and 126 illustrated in FIG. 1 are respectively defined as a first module BMS 124, a second module BMS 125, and a third module BMS 126. Further, the battery control devices 130_1, 130_2, and 130_3 illustrated in FIG. 1 are respectively defined as a first battery control device 130_1, a second battery control device 130_2, and a third battery control device 130_3. Further, sensors 132_1, 132_2, and 132_3 illustrated in FIG. 1 are respectively defined as a first sensor unit 132_1, a second sensor unit 132_2, and a third sensor unit 132_3. Further, rack BMSs 134_1, 134_2, and 134_3 illustrated in FIG. 1 are respectively defined as a first rack BMS 134_1, a second rack BMS 134_2, and a third rack BMS 134_3. For convenience of explanation, hereinafter, each component will be described in detail focusing on the first energy storage device 110_1.

In some embodiments, the first battery rack 120_1 may include at least one first battery module 121, and a rack housing having an accommodating space for accommodating at least one first battery module 121. The first battery module 121 may include a plurality of battery cells and a module housing. The plurality of battery cells may be stacked and accommodated in the module housing. The battery cell may include a positive electrode lead and a negative electrode lead. Depending on a shape of the battery, the battery cell having a cylindrical type, a prismatic type, or a pouch type may be used.

In some embodiments, the first battery rack 120_1 may include a first module BMS 124 for managing the first battery module 121. The first module BMS 124 may be connected to the first battery module 121 to manage the first battery module 121.

In some embodiments, the first battery control device 130_1 may include the first sensor unit 132_1 and the first rack BMS 134_1 for managing the first battery rack 120_1. The first rack BMS 134_1 may acquire and store a first ID. The first sensor unit 132_1 may transmit the first ID to the second battery control device 130_2. These components and functions will be described in detail herein.

In some embodiments, the energy storage system 100 may further include a system BMS 140. The system BMS 140 may be accommodated in an internal accommodation space of one of the plurality of energy storage devices 110_1, 110_2, 110_3, and ··· included in the energy storage system 100. For example, the system BMS 140 may be accommodated in an internal accommodation space of the first energy storage device 110_1, and may be electrically connected to the plurality of energy storage devices 110_1, 110_2, 110_3, and ···. However, the configuration is limited thereto, the system BMS 140 may be provided outside the plurality of energy storage devices 110_1, 110_2, 110_3, and ··· included in the energy storage system 100, and may be electrically connected to the plurality of energy storage devices 110_1, 110_2, 110_3, and ···. For example, the system BMS 140 may receive voltage information or the like related to the first battery rack 120_1 from the first rack BMS 134_1 to manage the first battery rack 120_1. Further, the system BMS 140 may generate a first ID to be assigned to the first battery rack 120_1. The system BMS 140 and the first rack BMS 134_1 may transmit and receive information by using, for example, controller area network (CAN) communication. In some embodiments, the system BMS 140 may receive pieces of voltage information or the like related to the plurality of battery racks 120_1, 120_2, 120_3, and ··· from the plurality of rack BMSs 134_1, 134_2, 134_3, and ··· to manage the plurality of battery racks 120_1, 120_2, 120_3, and ···.

Referring to FIG. 1 to FIG. 3, the first battery rack 120_1 according to some embodiments may include the plurality of first battery modules 121. The first battery module 121 may be an assembly in which a plurality of battery cells 310 are connected in series or in parallel, and may include a plurality of battery cells 310 and a frame that accommodates the plurality of battery cells 310. The battery cells 310 may be connected in series and/or in parallel to obtain desired capacity or output.

The battery cell 310 may be a secondary battery, and may be charged and discharged. The battery cell 310 may be obtained by stacking or winding an electrode assembly including a positive electrode, a negative electrode, and a separator interposed between the positive electrode and the negative electrode and sealing the electrode assembly together with an electrolyte in a case. The battery cell 310 may be any battery having a configuration that generates electrochemical energy by using reaction with an electrolyte, and may be, for example, a lithium polymer battery or a lithium ion battery.

In the first battery module 121, the plurality of battery cells 310 may be connected to each other in series via a plurality of connection terminals. One connection terminal may electrically connect a negative terminal of one battery cell 310 to a positive terminal of another battery cell 310. In this way, the plurality of battery cells 310 may be connected to each other in series. However, as described herein, the configuration is not limited thereto, and the plurality of battery cells 310 may be connected in parallel, or in series and in parallel, via the connection terminals. In the first battery module 121, the plurality of battery cells 310 may be accommodated with a plurality of rows.

The frame of the first battery module 121 may accommodate and protect the battery cells 310, and may be detachably fixed to the first battery rack 120_1. For example, the first battery rack 120_1 may be a cabinet that accommodates eight first battery modules 121.

The battery cell 310 may include at least one electrode assembly, a case 410 in which the electrode assembly is accommodated, and a cap plate 420 coupled to an open side of the case 410.

The case 410 may form an overall appearance of the battery cell 310, and may be formed of a conductive metal such as aluminum, an aluminum alloy, or nickel-plated steel. Further, the case 410 may provide a space in which the electrode assembly is accommodated. In FIG. 4, the case 410 is illustrated as a prismatic case, and the battery cell 310 is illustrated as a prismatic secondary battery. However, the scope of the present disclosure is not limited thereto. The battery cell 310 may be a secondary battery having any shape, such as a prismatic shape, a cylindrical shape, or a pouch shape.

The cap plate 420 may be coupled to an open side of the case 410 to seal the case 410. The case 410 and the cap plate 420 may be made of a conductive material. In some embodiments, an upper end of the case 410 may be opened, and the cap plate 420 may seal the opened upper end of the case 410. A positive terminal 430_1 electrically connected to the positive electrode and a negative terminal 430_2 electrically connected to the negative electrode may be coupled with the cap plate 420. For example, the positive terminal 430_1 and the negative terminal 430_2 may be coupled with the cap plate 420 to protrude outwardly through the cap plate 420.

Although not directly illustrated in the present disclosure, both ends of the case 410 of the battery cell 310 may be opened, and a plurality of cap plates 420 may seal the both opened ends of the case 410. At this time, the positive terminal 430_1 electrically connected to the positive electrode and the negative terminal 430_2 electrically connected to the negative electrode may be respectively coupled with the cap plate 420. The structure of such a secondary battery may have a side terminal structure in which the terminals are respectively disposed on both sides of the secondary battery.

In some embodiments, a vent portion 440 may be formed on at least one side of the battery cell 310 (for example, an upper end of the battery cell 310 in FIG. 4, that is, a side where the cap plate 420 seals the case 410). The vent portion 440 may be configured to be opened in a case where an internal pressure higher than a predetermined threshold pressure is detected in the battery cell 310. In FIG. 4, one vent portion 440 is illustrated as being formed at the center of one side of the case 410, but is not limited thereto. Unlike as illustrated in FIG. 4, any number of vent portions 440 may be formed at any location on one side of the case 410. For example, two or more vent portions 440 may be formed on one side of the case 410.

In some embodiments, the cap plate 420 may have an electrolyte inlet 450. For example, the electrolyte inlet 450 may be a hole formed on the cap plate 420, and may be formed to inject an electrolyte into the inside of the case 410 after the cap plate 420 is coupled to the opening of the case 410 and the case 410 is sealed. In FIG. 4, the electrolyte inlet 450 is illustrated as being formed on the cap plate 420, but is not limited thereto. The electrolyte inlet 450 may be sealed with a sealing member after the electrolyte is injected.

The battery cell 310 may be a lithium ion secondary battery, a sodium secondary battery, or the like. However, the scope of the present disclosure is not limited thereto, and examples of the battery cell 310 may include all battery cells capable of repeatedly supplying electricity by charging and discharging.

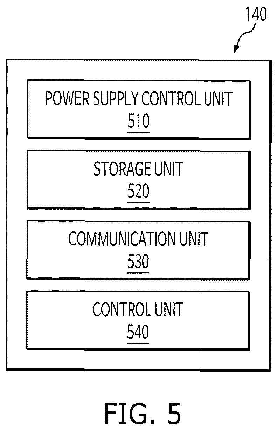

FIG. 5 is a block diagram illustrating a functional configuration of the system BMS 140 according to some embodiments of the present disclosure.

Referring to FIG. 5, the system BMS 140 may include a power supply control unit 510, a storage unit 520, a communication unit 530, and a control unit 540. The power supply control unit 510 may supply power required for operations of the components of the energy storage system 100. For example, the power supply control unit 510 may supply power required when a sensor (for example, the first sensor unit 132_1 in FIG. 1) transmits a first ID to a battery control device (for example, the second battery control device 130_2 in FIG. 1).

The storage unit 520 may store various programs required for operations of the system BMS 140. The storage unit 520 may also store IDs assigned to the energy storage devices (for example, the energy storage devices 110_1, 110_2, 110_3, and ··· in FIG. 1). That is, the storage unit 520 may store IDs assigned to identify each of the plurality of energy storage devices (for example, the energy storage devices 110_1, 110_2, 110_3, and ··· in FIG. 1) in a table by associating the IDs with the pieces of information related to the corresponding energy storage devices (for example, the energy storage devices 110_1, 110_2, 110_3, and ··· in FIG. 1). For example, the storage unit 520 may store the first ID assigned to the first energy storage device 110_1 illustrated in FIG. 1 in association with the information related to the first energy storage device 110_1.

The communication unit 530 may be configured to perform communication with a device outside the system BMS 140. The system BMS 140 may perform, via the communication unit 530, communication with the battery control device (for example, the first battery control device 130_1 in FIG. 1) to transmit a rack ID or receive a rack ID stored in the battery control device (for example, the first battery control device 130_1 in FIG. 1). The communication unit 530 may support a communication protocol for communication with the battery control device. For example, in a case where the battery control device is a CAN type battery control device, the communication unit 530 may be configured to support a CAN protocol. For example, the system BMS 140 may support a CAN communication protocol for communication between the first rack BMS 134_1 of the first battery control device 130_1 and the second rack BMS 134_2 of the second battery control device 130_2 in FIG. 1.

The control unit 540 may generate an ID and assign the ID to the energy storage device. For example, the control unit 540 may generate a first ID for the first energy storage device 110_1, and assign the first ID to the first rack BMS 134_1 of the first battery control device 130_1 in FIG. 1. Here, the first ID may include a number that is input by a user.

The control unit 540 may control the communication unit 530 and the power supply control unit 510 to transmit information related to the ID to the battery control device. For example, the control unit 540 may control the communication unit 530 and the power supply control unit 510 to transmit the first ID for the first energy storage device 110_1 to the first rack BMS 134_1 of the first battery control device 130_1.

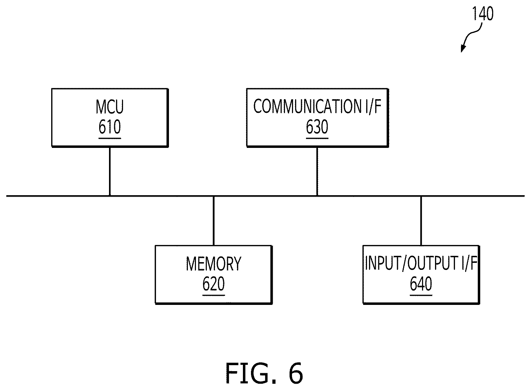

FIG. 6 is a diagram illustrating a hardware configuration of the system BMS 140 according to some embodiments of the present disclosure.

Referring to FIG. 6, the system BMS 140 may include a microcontroller unit (MCU, 610), a memory 620, a communication interface 630, and an input/output interface 640.

The MCU 610 may perform various operations and calculation processing in the system BMS 140, and control each component of the system BMS 140. An operating system program and a program for performing the functions of the system BMS 140 may be recorded in the memory 620. The memory 620 may include a volatile memory and a non-volatile memory. For example, the memory 620 may use at least one of various storage media such as a semiconductor memory such as a RAM, a ROM, or a flash memory, a magnetic disk, an optical disk, and the like. The memory 620 may be a memory built into the MCU 610, or may be an additional memory installed separately from the MCU 610. The communication interface 630 may be configured to perform communication with an external device in a wired manner and/or a wireless manner. The input/output interface 640 may receive various input signals and output various output signals. For example, the MCU 610 included in the system BMS 140 may receive signals from various sensors via the input/output interface 640.

Referring to FIG. 5 and FIG. 6, by causing the MCU 610 to execute the program stored in the memory 620, a module that performs the functions of the power supply control unit 510 and the control unit 540 may be implemented. The memory 620 may function as the storage unit 520. Further, the MCU 610 may function as the communication unit 530 in a case where the MCU 610 operates together with the communication interface 630.

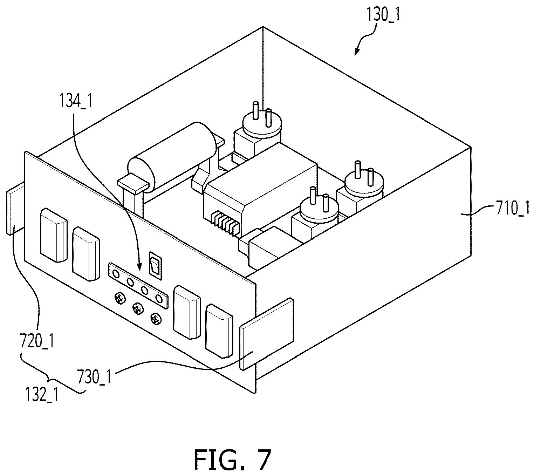

FIG. 7 is a perspective view illustrating the battery control device according to some embodiments of the present disclosure. For example, the battery control device may refer to the first battery control device 130_1 in FIG. 1. For convenience of explanation, a functional configuration of the first battery control device 130_1 will be described herein as an example.

Referring to FIG. 7, the first battery control device 130_1 may include a first rack BMS 134_1 and a first sensor unit 132_1. The first rack BMS 134_1 may acquire and store the first ID. Here, the first ID may mean an ID for identifying the energy storage device (for example, the first energy storage device 110_1 in FIG. 1) including the first battery control device 130_1. Further, the first ID may refer to an ID that is initially assigned in the energy storage system including the energy storage device. The first ID may be generated from the system BMS (for example, the system BMS 140 in FIG. 1). As another example, the first ID may include a number that is input by a user.

The first sensor unit 132_1 may include a first output sensor 730_1 disposed on one side of a case 710_1 of the first battery control device 130_1. The first sensor unit 132_1 may include a first input sensor 720_1 disposed on the other side opposite to one side of the case 710_1 of the first battery control device 130_1. In a case where the first battery control device 130_1 corresponds to the battery control device to which the first ID is transmitted, the first input sensor 720_1 may be omitted. The first output sensor 730_1 may transmit information related to the first ID that is stored in the first rack BMS 134_1 to another adjacent sensor. The first sensor unit 132_1 may include PIO sensors. The first input sensor 720_1 and the first output sensor 730_1 may be PIO sensors, and one PIO sensor may perform both or one of the role of the input sensor and the role of the output sensor.

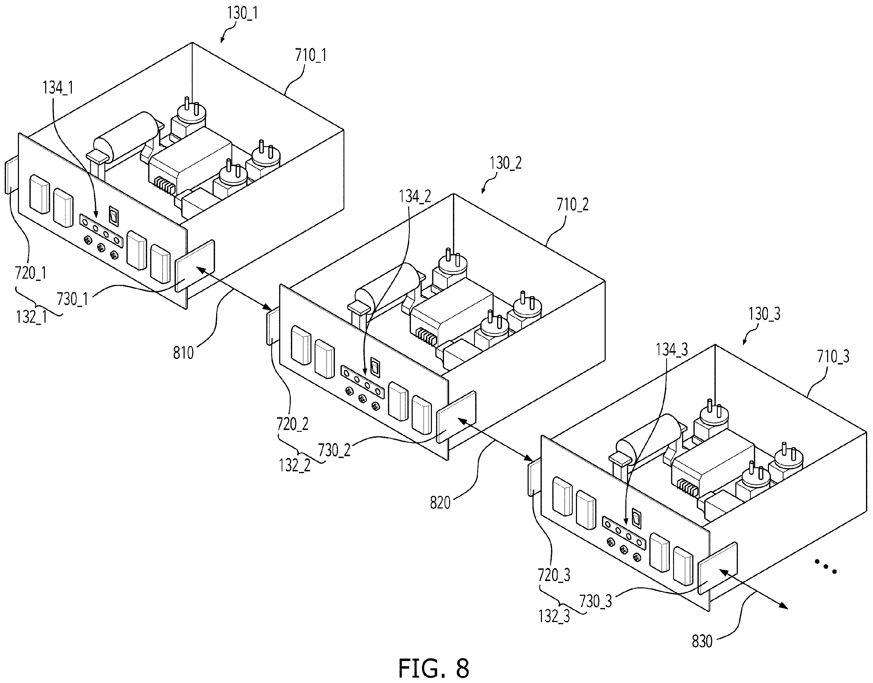

FIG. 8 is a diagram illustrating an arrangement relationship between the battery control devices according to some embodiments of the present disclosure.

The battery control devices in FIG. 8 may be, for example, the battery control devices included in the energy storage devices 110_1, 110_2, 110_3, and ··· illustrated in FIG. 1. For example, the first battery control device 130_1 may be included in the first energy storage device 110_1. The second battery control device 130_2 may be included in the second energy storage device 110_2. The third battery control device 130_3 may be included in the third energy storage device 110_3. The first energy storage device 110_1 and the second energy storage device 110_2 may be adjacent to each other. The second energy storage device 110_2 and the third energy storage device 110_3 may be adjacent to each other.

Referring to FIG. 8, the first battery control device 130_1 may include the first rack BMS 134_1 that acquires and stores the first ID 810 and the first sensor unit 132_1 that transmits the stored first ID 810 to the second battery control device 130_2. Here, the first ID 810 may mean an ID for identifying the energy storage device (for example, the first energy storage device 110_1 in FIG. 1) including the first battery control device 130_1. The first ID 810 may be generated from the system BMS (for example, the system BMS 140 in FIG. 1). As another example, the first ID may include a number that is input by a user. The first ID 810 may be an ID that is initially assigned to identify one energy storage device in the energy storage system (for example, the energy storage system 100 in FIG. 1). For example, the first ID 810 may be an ID that is initially assigned in the energy storage system 100 to identify the first energy storage device 110_1 of the energy storage system 100. At this time, the first energy storage device 110_1 may be disposed at one end of the energy storage system 100.

The second battery control device 130_2 may include the second sensor unit 132_2 that receives the first ID 810 from the first sensor unit 132_1, and the second rack BMS 134_2 that generates a second ID 820 based on the received first ID 810 and stores the generated second ID 820. Here, the second ID 820 may mean an ID for identifying the energy storage device (for example, the second energy storage device 110_2 in FIG. 1) including the second battery control device 130_2. The number given for the second ID 820 may be larger than the number given for the first ID 810.

The third battery control device 130_3 may include the third sensor unit 132_3 that receives the second ID 820 from the second sensor unit 132_2, and the third rack BMS 134_3 that generates a third ID 830 based on the received second ID 820 and stores the generated third ID 830. Here, the third ID 830 may mean an ID for identifying the energy storage device (for example, the third energy storage device 110_3 in FIG. 1) including the third battery control device 130_3. The number given for the third ID 830 may be larger than the number given for the second ID 820. As an unlimited example, the second ID 820 may be generated by adding 1 to the number given for the first ID 810, and the third ID 830 may be generated by adding 1 to the number given for the second ID 820.

The first sensor unit 132_1 may include a first output sensor 730_1 disposed on one side of a case 710_1 of the first battery control device 130_1. The first sensor unit 132_1 may include a first input sensor 720_1 disposed on the other side opposite to one side of the case 710_1 of the first battery control device 130_1. In a case where the first battery control device 130_1 corresponds to the battery control device to which the first ID is transmitted, the first input sensor 720_1 may be omitted. The first output sensor 730_1 may transmit the first ID 810 stored in the first rack BMS 134_1 to the adjacent second battery control device 130_2. The first sensor unit 132_1 may include PIO sensors. The first input sensor 720_1 and the first output sensor 730_1 may be PIO sensors, and one PIO sensor may perform both or one of the role of the input sensor and the role of the output sensor.

The second sensor unit 132_2 may include the second input sensor 720_2 that is disposed on one side of the case 710_2 of the second battery control device 130_2 and is adjacent to the first output sensor 730_1, and the second output sensor 730_2 that is disposed on the other side of the case 710_2 of the second battery control device 130_2. The second sensor unit 132_2 may include PIO sensors. The second input sensor 720_2 and the second output sensor 730_2 may be PIO sensors.

The third sensor unit 132_3 may be disposed on one side of the case 710_3 of the third battery control device 130_3, and may include the third input sensor 720_3 adjacent to the second output sensor 730_2. The third sensor unit 132_3 may include the third output sensor 730_3 disposed on the other side of the case 710_3 of the third battery control device 130_3. The third output sensor 730_3 may transmit information related to the third ID 830 generated by the third battery control device 130_3 to the adjacent battery storage device. The third sensor unit 132_3 may include PIO sensors. The third input sensor 720_3 and the third output sensor 730_3 may be PIO sensors.

In some embodiments, the first battery control device 130_1, the second battery control device 130_2, and the third battery control device 130_3 may use CAN communication for communication between the first rack BMS 134_1, the second rack BMS 134_2, and the third rack BMS 134_3.

As described herein, according to some embodiments of the present disclosure, an initial ID for identifying one energy storage device in the energy storage system may be assigned and stored in the battery control device. Thereafter, the battery control device of the energy storage device that is adjacent to the battery control device in which the first ID is stored may sense the first ID, and may perform calculation to generate an unique ID. By sequentially repeating this process for adjacent energy storage devices, the initial ID may be assigned to the first battery rack, and sequential IDs may be automatically assigned to the remaining battery racks. Accordingly, it is possible to save a time required for ID assignment, and thus, it is possible to efficiently manage the battery storage system.

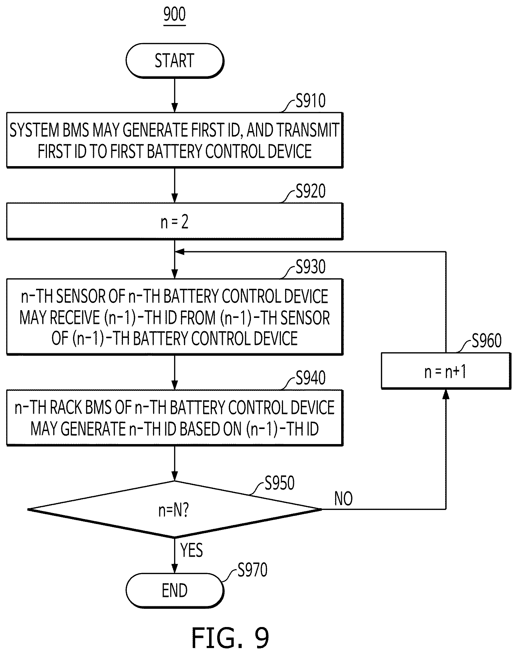

FIG. 9 is a flowchart (900) illustrating an ID assignment method of the energy storage system according to some embodiments of the present disclosure.

Referring to FIG. 1 to FIG. 9, the system BMS 140 may generate the first ID 810, and transmit the first ID to the first battery control device 130_1 (S910). The first ID 810 may be an initial ID for identifying the first energy storage device 110_1. In some embodiments, the first ID 810 is generated by the system BMS 140, but the first ID 810 may be arbitrarily generated by the user.

Thereafter, the second sensor unit 132_2 of the second battery control device 130_2 may receive the first ID 810 from the first sensor unit 132_1 of the first battery control device 130_1 (S920 and S930). Further, the second rack BMS 134_2 of the second battery control device 130_2 may generate the second ID 820 based on the first ID 810 (S940).

This process may be sequentially repeated for all the energy storage devices 110_1, 110_2, 110_3, and ··· in the energy storage system 100 (S950 and S960). After a last ID for the last energy storage device is generated, ID assignment of the energy storage system may be completed (S970).

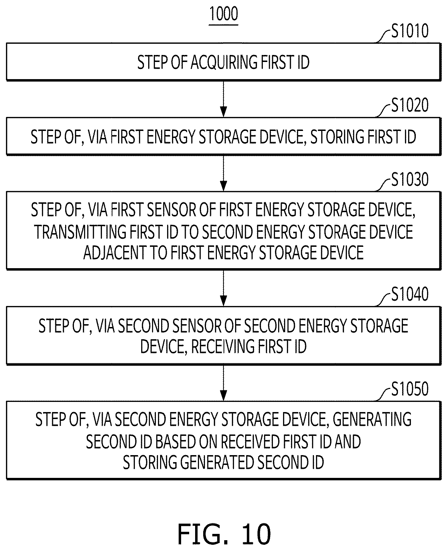

FIG. 10 is a flowchart (1000) illustrating an ID assignment method of the energy storage system according to some embodiments of the present disclosure.

Referring to FIG. 1 to FIG. 10, an ID assignment method of the energy storage system may include acquiring(S1010) a first ID 810 and storing(S1020), by a first energy storage device 110_1, the first ID 810. For example, the first ID 810 may be an ID that is initially assigned to identify one energy storage device in the energy storage system (for example, the energy storage system 100 in FIG. 1). In some embodiments, the first ID 810 may mean an ID for identifying the energy storage device (for example, the first energy storage device 110_1 in FIG. 1) including the first battery control device 130_1. The first ID 810 may be generated from the system BMS (for example, the system BMS 140 in FIG. 1). In some embodiments, the first ID 810 may include a number that is input by a user. The first ID 810 may be stored in the first battery control device 130_1 of the first energy storage device 110_1. In some embodiments, the first ID 810 may be stored in the first rack BMS 134_1 of the first battery control device 130_1.

Further, the ID assignment method of the energy storage system may include transmitting(S1030), by the first sensor unit 132_1 of the first energy storage device 110_1, the first ID 810 to the second energy storage device 110_2 adjacent to the first energy storage device 110_1, and receiving(S1040), by the second sensor unit 132_2 of the second energy storage device 110_2, the first ID 810. The first sensor unit 132_1 may be provided in the first battery control device 130_1 of the first energy storage device 110_1. The first sensor unit 132_1 may include a first output sensor 730_1 disposed on one side of a case 710_1 of the first battery control device 130_1. The first sensor unit 132_1 may transmit the first ID 810 to the second energy storage device 110_2 adjacent to the first energy storage device 110_1, via the first output sensor 730_1.

The second sensor unit 132_2 may be provided in the second battery control device 130_2 of the second energy storage device 110_2. The second sensor unit 132_2 may include the second input sensor 720_2 that is disposed on one side of the case 710_2 of the second battery control device 130_2, and the second output sensor 730_2 that is disposed on the other side of the case 710_2 of the second battery control device 130_2. The information related to the first ID 810 transmitted by the first output sensor 730_1 may be received via the second input sensor 720_2.

Further, the ID assignment method of the energy storage system may include generating (S1050), by the second energy storage device 110_2, a second ID 820 based on the received first ID 810 and storing the generated second ID 820. The second ID 820 may be an ID for identifying the second energy storage device 110_2. The number given for the second ID 820 may be larger than the number given for the first ID 810. The second ID 820 may be generated and stored by the second rack BMS 134_2. The second sensor unit 132_2 may transmit the second ID 820 to the third energy storage device 110_3 adjacent to the second energy storage device 110_2, via the second output sensor 730_2. Although not illustrated in FIG. 10, the ID assignment method of the energy storage system may further include checking, by the system BMS 140, whether the first ID 810 is stored in the first energy storage device 110_1 and whether the second ID 820 is stored in the second energy storage device 110_2.

This process may be sequentially repeated in the energy storage devices adjacent to each other in the energy storage system. Accordingly, it is possible to save a time required for ID assignment, and thus, it is possible to efficiently manage the battery storage system.

Although the present disclosure has been described with reference to embodiments and drawings illustrating aspects thereof, the present disclosure is not limited thereto. Various modifications and variations can be made by a person skilled in the art to which the present disclosure belongs within the scope of the present disclosure and the claims and their equivalents, herein.

## Claims

1. An energy storage system (100) comprising:
a first energy storage device (110_1) that comprises a first battery rack (120_1) and a first battery control device (130_1) connected to the first battery rack (120_1);
a second energy storage device (110_2) that comprises a second battery rack (120_2) and a second battery control device (130_2) connected to the second battery rack (120_2); and
a system battery management system, BMS, (140) electrically connected to the first energy storage device (110_1) and the second energy storage device (110_2),
wherein the first battery control device (130_1) comprises:
a first rack BMS (134_1) configured to acquire and store a first identification, ID, (810), and
a first sensor unit (132_1) configured to transmit the stored first ID (810) to the second battery control device (130_2), and
the second battery control device (130_2) comprises:
a second sensor unit (132_2) configured to receive the first ID (810) from the first sensor unit (132_1), and
a second rack BMS (134_2) configured to generate a second ID 820 based on the received first ID (810) and to store the generated second ID (820).

2. The energy storage system (100) according to claim 1,
wherein the first energy storage device (110_1) and the second energy storage device (110_2) are adjacent to one another.

3. The energy storage system (100) according to claim 1 or 2,
wherein a number given for the second ID (820) is larger than a number given for the first ID (810).

4. The energy storage system (100) according to claim 1, 2 or 3,
wherein the first sensor unit (132_1) and the second sensor unit (132_2) comprise parallel input/output, PIO, sensors.

5. The energy storage system (100) according to any one of claims 1 to 4,
wherein the first sensor unit (132_1) comprises a first output sensor (730_1) disposed on a side of a case (710_1) of the first battery control device (130_1), and
the second sensor unit (132_2) comprises a second input sensor (720_2) disposed on a side of a case (710_2) of the second battery control device (130_2) and is adjacent to a first output sensor (730_1), and a second output sensor (730_2) disposed on another side of the case (710_2) of the second battery control device (130_2).

6. The energy storage system (100) according to claim 5, further comprising:
a third energy storage device (110_3) that is adjacent to the second energy storage device (110_2) and comprises a third battery rack (120_3) and a third battery control device (130_3) connected to the third battery rack (120_3),
wherein the second sensor unit (132_2) is configured to transmit the generated second ID (820) to the third battery control device (130_3) of the third energy storage device (110_3), and
the third battery control device (130_3) comprises:
a third sensor unit (132_3) configured to receive the second ID (820) from the second sensor unit (132_2), and
a third rack BMS (134_3) configured to generate a third ID (830) based on the received second ID (820) and stores the generated third ID (830).

7. The energy storage system (100) according to claim 6,
wherein a number given for the third ID (830) is larger than a number given for the second ID (820).

8. The energy storage system (100) according to claim 6 or 7,
wherein the third sensor unit (132_3) comprises a third input sensor (720_3) disposed on a side of a case (710_3) of the third battery control device (130_3) and is adjacent to the second output sensor (730_2).

9. The energy storage system (100) according to any one of claims 1 to 8,
wherein the first energy storage device (110_1) is disposed at an end of the energy storage system (100).

10. The energy storage system (100) according to any one of claims 1 to 9,
wherein the first battery control device (130_1) and the second battery control device (130_2) use controller area network (CAN) communication for communication between the first rack BMS (134_1) and the second rack BMS (134_2).

11. An ID assignment method of an energy storage system (100), the method comprising:
acquiring a first ID (810);
storing, by a first energy storage device (110_1), the first ID (810);
transmitting, by a first sensor unit (132_1) of the first energy storage device (110_1), the first ID (810) to a second energy storage device (110_2) adjacent to the first energy storage device (110_1);
receiving, by a second sensor unit (132_2) of the second energy storage device (110_2), the first ID (810); and
generating, by the second energy storage device (110_2), based on the received first ID (810), a second ID (820) and storing the generated second ID (820).

12. The ID assignment method of an energy storage system (100) according to claim 11,
wherein a number given for the second ID (820) is larger than a number given for the first ID (810).

13. The ID assignment method of an energy storage system (100) according to claim 11 or 12,
wherein the first sensor unit (132_1) and the second sensor unit (132_2) comprise parallel input/output, PIO, sensors.

14. The ID assignment method of an energy storage system (100) according to claim 11, 12 or 13,
wherein the first energy storage device (110_1) comprises a first battery control device (130_1),
the second energy storage device (110_2) comprises a second battery control device (130_2),
the first battery control device (130_1) stores the first ID (810), and
the second battery control device (130_2) generates the second ID (820) and stores the generated second ID (820).

15. The ID assignment method of an energy storage system (100) according to claim 14,
wherein the first sensor unit (132_1) comprises a first output sensor (730_1) that is disposed on a side of a case (710_1) of the first battery control device (130_1),
the second sensor unit (132_2) comprises a second input sensor (720_2) that is disposed on a side of a case (710_2) of the second battery control device (130_2) and is adjacent to a first output sensor (730_1), and a second output sensor (730_2) that is disposed on another side of the case (710_2) of the second battery control device (130_2), and
the second input sensor (720_2) receives the first ID (810) transmitted from the first output sensor (730_1).
